# EUROPEAN PATENT APPLICATION

(11) **EP 2 246 124 A1**
(43) Date of publication of application: **03.11.2010**
(21) Application number: 09703789.9
(22) Date of filing: 19.01.2009
(51) Int. Cl.: B05D 1/18, B05D 7/14, B32B 15/04, B32B 15/08, C23C 22/07

(54) **COATED METAL MATERIAL**

(30) Priority: 24.01.2008 JP 2008013460
(71) Applicant: Nippon Light Metal Company, Ltd., Tokyo 140-8628 (JP)
(72) Inventor: TAKASAWA, Reiko, Shizuoka-shi Shizuoka 421-3291 (JP)
(86) International application number: PCT/JP2009/050659
(87) International publication number: WO 2009/093541

(57) **Abstract**

Provided is a coated metal material which has a film of coating on the surface of a metal material such as aluminum, aluminum alloy, and steel, is free of chromium and eco-friendly, and shows excellent weather resistance and corrosion resistance. The film of coating on the surface of an aluminum material such as aluminum and aluminum alloy or a steel material such as cold-rolled steel, hot-rolled steel, stainless steel, zinc plated steel, zinc-iron alloy plated steel, zinc-magnesium alloy plated steel, aluminum alloy plated steel, and aluminum-zinc alloy plated steel is formed on a film of undercoat which contains an ultraviolet absorber and/or a HALS (hindered amine light stabilizer) in an amount in the range of 5-2,500 mg/cm² and is substantially free of chromium. Hence, the coated metal material is substantially free of hexavalent and trivalent chromium and eco-friendly and can be used without anxiety in a wide range of applications.

## Description

### Field of Technology

This invention relates to a coated metal material which has a substantially chromium-free, excellently corrosion-resistant film of coating on the surface of a metal material belonging to a group of aluminum materials such as aluminum and aluminum alloys or a group of steel materials such as cold-rolled steel, hot-rolled steel, stainless steel, zinc plated steel, zinc-iron alloy plated steel, zinc-magnesium alloy plated steel, aluminum alloy plated steel, and aluminum-zinc alloy plated steel.

### Background Technology

The use of chromium-based surface treating agents in the processes for protecting aluminum materials and steel materials from corrosion such as the chromate treatment and the chromate-phosphate process is well known and these processes are still used widely today (refer to patent documents 1 to 6).
In recent years, however, there is a growing tendency throughout the world to regulate the use of environmental load substances; for example, EU issued a directive on the disposal of waste automobiles to start regulating legally the use of hexavalent chromium.

The inventors of this invention earlier proposed the use of trivalent chromium (chromium nitrate) together with trivalent or higher polyhydric alcohols containing 3 or more primary alcoholic hydroxyl groups (refer to patent document 7). However, trivalent chromium changes partly to hexavalent chromium on heating according to reports even though there is no legal regulation on trivalent chromium for the present. Well aware of this situation, they developed a coated aluminum material which has a silicon-containing film of coating on the surface, is substantially free of hexavalent and trivalent chromium or what is called "non-chromium" and eco-friendly, and shows excellent corrosion resistance and proposed the said coated aluminum material (refer to patent document 8).

Further, other proposals such as the following are made on non-chromium coating of metals: forming a film containing 50-90 mass% of a specified crosslinked resin matrix (A) and 10-50 mass% of an inorganic rust preventive (B) such as colloidal silica, phosphoric acid, and niobium oxide sol on the surface of a metal plate such as a zinc plated steel plate is proposed to provide a metal plate which is organic-coated without a chromate treatment and yet shows excellent corrosion resistance, alkali resistance, solvent resistance, scratch resistance, and adhesive properties (patent document 9); a chemical treatment based on zirconium and titanium is proposed as a non-chromium chemical treatment good for all metals (patent document 10); application of an undercoat containing a sulfur compound and polyurethane is proposed as a non-chromium treatment in coating of zinc plated steel plates and aluminum materials (patent document 11); and forming an undercoat containing a silane coupling agent, a urethane resin, and a zirconium compound as a non-chromium treatment of a metal material is proposed to provide a surface treating film of excellent corrosion resistance and adhesive properties (patent document 12).
These non-chromium treatments respectively yield good results in respect to corrosion resistance and primary adhesion; however, the problem with them is that the film of coating deteriorates under the influence of ultraviolet light with the resultant deterioration in the adhesive properties.
Patent document 1: JP, 01-299,877 A (1989)
Patent document 2: JP, 02-42,389 B (1990)
Patent document 3: JP, 03-77,440 B (1991)
Patent document 4: JP, 03-131,300 A (1991)
Patent document 5: JP, 01-53,353 B (1989)
Patent document 6: JP, 06-146,001 B (1994)
Patent document 7: JP 2000-256,868 A
Patent document 8: JP 2004-283,824 A
Patent document 9: JP 2005-281,863 A
Patent document 10: JP 2004-218,070 A
Patent document 11: JP 2006-124,752 A
Patent document 12: JP 2006-328,445 A

### Disclosure of the Invention

### The Problems to be Solved by the Invention

The inventors of this invention conducted further studies on coated aluminum materials and coated steel materials on which the aforementioned kind of non-chromium, eco-friendly, and highly corrosion-resistant film of coating is formed, found surprisingly that interposition of a film of undercoat containing a specified amount of an ultraviolet absorber and/or a HALS (hindered amine light stabilizer) between the surface of the metal material and the film of coating can inhibit deterioration of the film of coating by ultraviolet light as much as possible and prevent deterioration of the adhesive properties of the film of coating to a striking degree as well thereby helping to produce a coated metal material which is remarkably improved in weather resistance and displays markedly improved performance in resistance to weathering and corrosion in outdoor environment, and completed this invention.

Accordingly, an object of this invention is to provide a coated metal material which has a film of coating on the surface of a metal material such as aluminum, aluminum alloy, and steel, is non-chromium and eco-friendly, and displays excellent weather resistance and corrosion resistance.

### Means to Solve the Problems

Thus, this invention relates to a coated metal material wherein a film of coating on the surface of a metal material such as an aluminum material made up of aluminum and aluminum alloy and a steel material is formed on a film of undercoat containing an ultraviolet absorber and/or a HALS in an amount in the range of 5-2,500 mg/m² and substantially no chromium. Here, the wording "containing substantially no chromium" means that chromium is present below the detection limit of chromium (which is normally below 0.5 mg/m²) in X-ray fluorescence analysis or it means that chromium is not deliberately added.

According to this invention, the aluminum materials include materials formed by rolling, extruding, die casting, or moulding of aluminum or aluminum alloys, materials fabricated from the foregoing materials, and materials obtained by combination of the foregoing fabricated materials. The steel materials include steel plates, structural steel materials, and steel bars, materials fabricated from the foregoing materials, and materials obtained by combination of the foregoing fabricated materials. The plated steel materials include zinc plated steel materials such as zinc electroplated steel materials and zinc hot-dip plated steel materials, zinc-iron alloy plated steel materials, zinc-magnesium alloy plated steel materials, aluminum plated steel materials, and aluminum-zinc alloy plated steel materials such as zinc-5% aluminum alloy hot-dip plated steel materials and 55% aluminum-zinc alloy hot-dip plated steel materials.

According to this invention, the aforementioned film of undercoat is formed on the uncontaminated surface of the metal material and it needs to contain an ultraviolet absorber and/or a HALS in an amount in the range of 5 mg/m² to 2,500 mg/m², preferably in the range of 10 mg/m² to 2,000 mg/m². When the amount of the ultraviolet absorber and/or the HALS in the film of undercoat is less than 5 mg/m², ultraviolet light nonetheless deteriorates the film of coating and this presents the problem that deterioration of the adhesive properties of the film of coating cannot be prevented effectively. On the other hand, an amount of more than 2,500 mg/m² in the film of undercoat means the presence of an excess of the ultraviolet absorber and/or the HALS and this offers the problem that the adhesive properties of the film of coating deteriorate even when ultraviolet light does not deteriorate the film of coating. When the content of the ultraviolet absorber and/or the HALS in the film of undercoat falls below 5 wt%, deterioration by ultraviolet light tends to occur more easily.

Furthermore, according to this invention, the thickness of the film of undercoat is normally in the range of 5 nm to 5 µm, preferably in the range of 10 nm to 2 µm, and the content of the ultraviolet absorber and/or the HALS in the film of undercoat is 5 wt% or more. When the thickness of the film of undercoat is less than 5 nm, there is the possibility of the effect of this invention being not fully produced. On the other hand, when the thickness is greater than 5 µm, there is the possibility of the adhesive properties becoming insufficient.

The film of undercoat containing an ultraviolet absorber and/or a HALS can be formed using, for example, commercially available ultraviolet absorbers and HALSs. Any compound that absorbs ultraviolet light may be used as an ultraviolet absorber and examples of such a compound include benzotriazol derivatives, triazine derivatives, benzophenone derivatives, benzoates, salicylates, and anilides. Concretely, the ultraviolet absorbers based on benzotriazol derivatives include TINUVIN PS, TINUVIN 99-2, TINUVIN 109, TINUVIN 384-2, TINUVIN 900, TINUVIN 928, TINUVIN 130, and TINUVIN 5236 available from Ciba Specialty Chemicals; the ultraviolet absorbers based on triazine derivatives include TINUVIN 400, TINUVIN 405, TINUVIN 460, TINUVIN 477DW, and TINUVIN 479 available from Ciba Specialty Chemicals; the ultraviolet absorbers based on benzophenone derivatives include Sumisorb 130 available from Sumitomo Chemical Co., Ltd.; the ultraviolet absorbers based on benzoates include Sumisorb 400 available from Sumitomo Chemical Co., Ltd.; the ultraviolet absorbers based on salicylates include phenyl salicylate available from API Corporation; and the ultraviolet absorbers based on anilides include Hostavin 3206 available from Clariant Japan. However, the ultraviolet absorbers and HALSs useful for this invention are not limited to the examples given above.

A HALS does not absorb ultraviolet light by itself; however, it prevents deterioration of the film of coating by ultraviolet light as it has a function of capturing harmful free radicals generated by the energy of ultraviolet light. Any of commercially available hindered amines may be used as a HALS. Concretely, examples of commercially available hindered amines include TINUVIN 292, TINUVIN 144, TINUVIN 622, TINUVIN 111FDL, TINUVIN 123, TINUVIN 5100, TINUVIN 152, and TINUVIN 780 available from Ciba Specialty Chemicals and Adekastab LA-52, Adekastab LA-57, Adekastab LA-62, Adekastab LA-67, Adekastab LA-63, Adekastab LA-68LD, Adekastab LA-77, Adekastab LX-335, and Adekanol UC-605 available from Asahi Denka Co., Ltd. The ultraviolet absorbers and HALSs useful for this invention are not limited to the examples given above. It is allowable to use a commercially available blend of ultraviolet absorber and HALS.

The film of coating tends to deteriorate more easily by ultraviolet light in the outdoor environment where it is doubly attacked by ultraviolet light; that is, ultraviolet light falls on the film, passes through the film, gets reflected on the surface of the metal, and passes through the film again. In the case where the film of coating is a clear coat through which ultraviolet light passes easily, the film of coating deteriorates easily by this double attack of ultraviolet light and there occurs a problem of deterioration of the adhesive properties of the film of coating. Addition of an ultraviolet absorber and a HALS to the film of coating is known as a means to prevent deterioration of the film of coating by ultraviolet light. However, the ultraviolet absorber or HALS thus added may bleed out from the film of coating or the amount to be added might be limited because excessive addition would make it impossible for the film of coating to form; for this reason, the ultraviolet absorber or HALS cannot produce its effect fully and fails to prevent reflection of ultraviolet light on the surface of the metal.

In the coated metal material of this invention, the aforementioned film of undercoat containing an ultraviolet absorber and/or a HALS is formed on the surface of the metal material. Hence, ultraviolet light that has passed through the film of coating is absorbed or cut off in the film of undercoat on the surface of the metal material or the harmful free radicals generated by irradiation with ultraviolet light are captured in the film of undercoat; as a result, the film of undercoat can prevent deterioration of the film of coating by reflected ultraviolet light or by harmful free radicals generated by ultraviolet light and the adhesive properties of the film of coating improve.

According to this invention, it is allowable to add a metal oxide to the aforementioned film of undercoat for the purpose of improving further the weather resistance and corrosion resistance.

The metal oxide to be added for this purpose may be any metal oxide which is not chromium oxide and functions without being decomposed by ultraviolet light. From the viewpoint of corrosion resistance, zinc oxide, aluminum oxide, silicon oxide, zirconium oxide, and titanium oxide are preferred and zinc oxide, aluminum oxide, and silicon oxide are more preferred. Zinc oxide is available as sol or fine powder, aluminum oxide is available as sol or fine powder, and silicon oxide is available as fine silica powder, silica sol such as colloidal silica, and vapor phase silica. Although no specific restriction is imposed on the aforementioned colloidal silica, examples of spherical colloidal silica include Snowtex-C, Snowtex-O, Snowtex-N, Snowtex-S, Snowtex-OL, Snowtex-XS, and Snowtex-XL manufactured by Nissan Chemical Industries, Ltd.; examples of chain-like colloidal silica include Snowtex-UP and Snowtex-OUP manufactured by Nissan Chemical Industries, Ltd.; and examples of vapor phase silica include Aerosil 130, Aerosil 200, Aerosil 200CF, Aerosil 300, Aerosil 300CF, Aerosil 380, and Aerosil MOX80 manufactured by Nippon Aerosil Co., Ltd.

The amount of the metal oxide added to the film of undercoat is controlled in the range of 5 mg/m² to 400 mg/m², preferably in the range of 15 mg/m² to 200 mg/m², or it is controlled in the range of 1 wt% to 90 wt%, preferably in the range of 2 wt% to 85 wt%.

According to this invention, it is allowable to add a phosphorus compound to the aforementioned film of undercoat for the purpose of improving the adhesive properties and corrosion resistance still further if necessary. The phosphorus compound thus added reacts with the metal on the surface to form a phosphate salt such as aluminum phosphate and zinc phosphate and, in some cases, it may become contained as a phosphate in the film of undercoat.

The phosphorus compounds to be added for this purpose are not specifically limited. However, they preferably include orthophosphoric acid, phosphonic acid, pyrophosphoric acid, and tripolyphosphoric acid and salts thereof and they may be used singly or as a mixture of two kinds or more. Specific examples include phosphoric acid, triammonium phosphate, trisodium phosphate, aluminum phosphate, zinc phosphate, and magnesium phosphate.

The amount of the phosphorus compound to be added to the film of undercoat is controlled in the range of 0.5 mg/m² to 15 mg/m² as phosphorus, preferably in the range of 1 mg/m² to 10 mg/m² as phosphorus, or it is preferably controlled in the range below 20 wt%. When the amount of phosphorus falls below 0.5 mg/m², the purpose of adding the phosphorus compound is not attained. On the other hand, when the amount of phosphorus exceeds 15 mg/m², poor adhesion becomes a problem. When the content of phosphorus exceeds 20 wt%, deterioration of the adhesive properties becomes a problem.

Further, according to this invention, it is allowable to add an organic binder to the aforementioned film of undercoat in addition to the aforementioned ultraviolet absorber and/or HALS, metal oxide, and phosphorus compound for the purpose of improving the adhesive properties. The organic binder is not specifically limited and it may be any substance that can contribute to the preparation of a homogeneous film-forming solution; for example, a water-soluble organic resin, a water-dispersible organic resin, and a solvent-based organic resin. Examples of the organic binders include acrylic resins, polyester resins, polyurethane resins, epoxy resins, acrylic urethane resins, silicone resins, acrylic silicone resins, acrylic polyester resins, and acrylic urethane silicone resins and modified resins of the foregoing resins.

Further, in addition to the aforementioned substances, it is allowable to add coating additives such as antioxidants, dispersants, solvents, and surface adjusters to the film of undercoat of this invention.

According to this invention, the film of undercoat may be formed on the surface of the metal material in a single layer or in multiple layers including at least a layer containing an ultraviolet absorber and/or a HALS. In the case where the film of undercoat is formed in multiple layers, the layer of film containing an ultraviolet absorber and/or a HALS may be formed directly on the uncontaminated surface of the metal material. However, from the viewpoint of corrosion resistance, the film of undercoat may be formed in multiple layers by forming a first layer containing a phosphorus compound on the surface of the metal material in advance and then forming a second layer containing an ultraviolet absorber and/or a HALS on the first layer.

The aforementioned first layer is formed using a film-forming solution containing a phosphorus compound. As described earlier, the phosphorus compound in some cases reacts with the metal on the surface to form a film of phosphate such as aluminum phosphate and zinc phosphate. The amount of the phosphorus compound to be added to the first layer for this purpose is controlled in the range of 0.5 mg/m² to 15 mg/m² as phosphorus, preferably in the range of 1 mg/m² to 10 mg/m² as phosphorus, or the content of the phosphorus compound as phosphorus in the first layer is controlled in the range below 50 wt%. When the amount of phosphorus falls below 0.5 mg/m² in the first layer, the purpose of adding the phosphorus compound is not attained. On the other hand, when the amount of phosphorus exceeds 15 mg/m², poor adhesion becomes a problem. When the content of phosphorus in the first layer exceeds 50 wt%, deterioration of the adhesive properties becomes a problem.

The film of coating to be formed on the film of undercoat is not specifically limited and a variety of paints may be used in forming this film of coating. Examples include acrylic paints, polyester paints, urethane paints, acrylic urethane paints, acrylic polyester paints, epoxy paints, fluoropolymer-based paints, silicone paints, acrylic silicone paints, urethane silicone paints, acrylic urethane silicone paints, alkali silicate-based paints, silica sol-based paints using colloidal silica, titanium oxide-based paints, and ceramic paints and they may be organic paints, inorganic paints, or organic-inorganic hybrid paints.

Further, the film of coating may be formed on the film of undercoat by applying a silicon-containing paint and hence it may be a silicon-containing film of coating. The silicon-containing paints to be used for forming this silicon-containing film of coating are not specifically limited and, concretely, they are paints that contain monomers or polymers possessing a siloxane bond or paints that contain alkoxysilanes and/or silanol groups. Specifically, examples of such paints include silicone paints, acrylic silicone paints, urethane silicone paints, acrylic urethane silicone paints, alkali silicate-based paints, silica sol-based paints, silica-based paints, and ceramic paints. There are solvent-based paints, aqueous emulsion-based paints, water-based paints, and the like and aqueous emulsion-based paints are particularly preferred.

According to this invention, the film of coating to be formed on the film of undercoat may be a film of topcoat itself that makes up the outermost layer of the coated metal material or it may be a film of primer on which the topcoat is formed. Although the thickness of the film of coating to be formed on the film of undercoat is selected to suit a specific application of the coated metal material, the thickness of the layer to function as a primer is controlled normally in the range of 0.1 µm to 20 µm, preferably in the range of 0.5 µm to 15 µm. When the thickness is less than 0.1 µm, sufficient corrosion resistance may not be displayed. On the other hand, when the thickness exceeds 20 µm, there occurs a problem of deterioration of adhesion to the topcoat.

In the case where the film of coating to be formed on the film of undercoat is used as a layer of primer, an overcoating paint is further applied to the layer of primer to form a film of topcoat thereon. There is no specific restriction on the overcoating paints to be used here and examples include acrylic paints, polyester paints, urethane paints, acrylic urethane paints, acrylic polyester paints, epoxy paints, fluoropolymer-based paints, silicone paints, acrylic silicone paints, urethane silicone paints, acrylic urethane silicone paints, alkali silicate-based paints, silica sol-based paints using colloidal silica, titanium oxide-based paints, and ceramic paints. The paints may be organic paints, inorganic paints, or organic-inorganic hybrid paints. The topcoat may be formed not in a single layer only but in two layers or more. The thickness of the topcoat is not specifically limited and it is normally in the range of 1-100 µm.

The coated metal material of this invention is produced by applying a solution for film-forming treatment which contains an ultraviolet absorber and/or a HALS and further contains, if necessary, a metal oxide, a phosphorus compound, an organic binder, and other coating additives to the surface of the metal material, carrying out the film-forming treatment to form a film of undercoat which contains the ultraviolet absorber and/or the HALS in an amount in the range of 5-2,500 mg/m², and applying a paint to the film of undercoat.

In the production of the coated metal material according to this invention, the surface of the metal material may be pretreated for the purpose of degreasing, surface adjustment, and the like, preferably prior to the film-forming treatment, by a process consisting of an acid treatment with an acid solution, preferably an acid solution with a pH of 6 or less, and/or an alkaline treatment with an alkaline solution, preferably an alkaline solution with a pH of 8 or more.

The acid solutions to be used in this pretreatment may be prepared, for example, from commercially available acid degreasing agents or from acid reagents consisting of mineral acids such as sulfuric acid, nitric acid, hydrofluoric acid, and phosphoric acid, organic acids such as acetic acid and citric acid, or mixtures of the foregoing acids and, preferably, they are acid solutions with a pH of 6 or less. The alkaline solutions may be prepared, for example, from commercially available alkaline degreasing agents, from alkali reagents such as caustic soda, or from mixtures of the foregoing and, preferably, they are alkaline solutions with a pH of 8 or more.

The acid solution and/or the alkaline solution to be used in the pretreatment may contain a silicon compound. The use of a silicon compound-containing acid solution and/or a silicon compound-containing alkaline solution is expected to produce an effect of strengthening the adhesion between the surface of the metal material and the film of undercoat to be formed thereon. Examples of such acid and alkaline solutions include acid solutions containing colloidal silica and alkaline solutions containing silicates such as sodium metasilicate.

The procedure and the conditions of the pretreatment with the use of the aforementioned acid solution and/or alkaline solution may be the same as those of the pretreatment of this kind known in the past. For example, the pretreatment is carried out by a process such as immersion and spraying at a temperature in the range of room temperature to 90°C, preferably in the range of room temperature to 70°C, for a period in the range of 1 second to 15 minutes or so, preferably in the range of 5 seconds to 10 minutes or so, more preferably in the range of 5 seconds to 3 minutes, per 1 pretreatment process.

The surface of the metal material may be etched or not etched before the pretreatment by the acid solution and/or alkaline solution.
After the pretreatment, the surface of the metal material is washed with water if necessary and the water for this washing is selected from industrial water, underground water, tap water, ion exchanged water, and the like to suit the selected metal material. The pretreated metal material is subjected to a drying treatment if necessary. The process for this drying may be natural air drying in which the pretreated metal material is left standing at room temperature or forced drying using an air blower, a dryer, an oven, or the like.

Then, the film-forming treatment for making a film of undercoat is carried out on the surface of the metal material or on the surface of the metal material that had received in advance, if necessary, the aforementioned acid treatment and/or alkaline treatment. In this film-forming treatment, a solution for film-forming treatment containing an ultraviolet absorber and/or a HALS and further containing, if necessary, a metal oxide, a phosphorus compound, an organic binder, and other coating additives is applied in one step. Alternatively, a solution for film-forming treatment containing a phosphorus compound is applied first and, if necessary, dried and then another solution for film-forming treatment containing an ultraviolet absorber and/or a HALS is applied; that is, the film of undercoat consisting of the first and second layers is formed in two steps. Furthermore, if necessary, the film of undercoat consisting of multiple layers including at least one layer containing an ultraviolet absorber and/or a HALS may be formed in three or more steps.

The solution for film-forming treatment to be used in the aforementioned formation of the film of undercoat is preferably a solution in water, a water-based solution to which a water-soluble solvent is added, a solution in an organic solvent to which a water-soluble solvent is added, or a solution in an organic solvent and, if necessary, an additive such as an alcohol, a dispersant, and a surface adjuster may be added.

In the film-forming treatment for forming the film of undercoat, the process and the conditions for application of the aforementioned solution for film-forming treatment to the surface of the metal material are presented below as an example. The solution for film-forming treatment is applied either by a precoat process such as roll coating, spray coating, immersion coating, bar coating, and electrostatic coating or by a postcoat process such as spray coating, spin coating, immersion coating, and electrostatic coating at a temperature normally in the range of room temperature to 80°C, preferably in the range of room temperature to 50°C, for a period in the range of 1 second to 10 minutes or so, preferably in the range of 2 seconds to 5 minutes or so, per 1 film-forming pretreatment process. A drying step follows, if necessary, after the application of the solution for film-forming treatment and drying is performed by natural air drying in which the undercoated metal material is left standing at room temperature or by forced drying using an air blower, a dryer, an oven, or the like. The forced drying is performed at a temperature in the range of room temperature to 250°C for a period in the range of 1 second to 10 minutes or so, preferably in the range of 2 seconds to 5 minutes or so.

After the formation of the film of undercoat on the surface of the metal material as specified, a paint is applied to the film of undercoat to form a film of coating. For application of this paint, a precoat process such as roll coating, spray coating, immersion coating, bar coating, and electrostatic coating or a postcoat process such as spray coating, spin coating, immersion coating, and electrostatic coating may be used. Furthermore, in the drying operation which follows the application of the paint, a drying process that suits the selected paint may be adopted; for example, drying is performed using an air blower, a dryer, an oven, or the like at a temperature in the range of room temperature to 300°C for a period in the range of 5 seconds to 24 hours.

In the case where the aforementioned film of coating is used as a layer of primer and a film of topcoat is formed on this layer of primer, the situation is the same as the conventional case where an overcoating paint is applied to a layer of primer to form a film of topcoat. For example, an overcoating paint is applied to the film of primer either by a precoat process such as roll coating, spray coating, immersion coating, bar coating, and electrostatic coating or by a postcoat process such as spray coating, spin coating, immersion coating, and electrostatic coating and is then dried by a process that suits the overcoating paint.

### Effects of the Invention

According to this invention, it is possible to provide a coated metal material which has a film of coating on the surface of a metal material such as an aluminum material and a steel material, is substantially non-chromium and eco-friendly, and shows excellent weather resistance and corrosion resistance.

### Preferred Embodiments of the Invention

A preferred mode of reducing this invention into practice will be explained below with reference to the examples and comparative examples.

### [Examples 1-26 and Comparative Examples 1-6]

In Examples 1-20 and Comparative Examples 1, 2, 5, and 6, a panel of aluminum (JIS 5052) measuring 70×150×0.8 mm was prepared and subjected to the pretreatment, film-forming treatment, and formation of a film of coating in the manner described below.

In the rest of the Examples and Comparative Examples, the following panels of steel materials were respectively subjected to the pretreatment, film-forming treatment, and formation of a film of coating: a panel of zinc electroplated steel (deposition amount, 20 g/m²) measuring 70×150×0.6 mm in Example 21; a panel of zinc hot-dip plated steel (deposition amount, 120 g/m²) measuring 70×150×0.6 mm in Example 22 and Comparative Example 3; a panel of zinc-5% aluminum alloy plated steel (deposition amount, 50 g/m²) measuring 70 ×150×0.6 mm in Example 23; and a panel of zinc-55% aluminum alloy plated steel (deposition amount, 150 g/m²) measuring 70×150×0.6 mm in Examples 24-26 and Comparative Example 4.

### [Pretreatment]

In Examples 1 and 11, the panel was immersed in a 10 wt% aqueous sulfuric acid solution at 40°C for 3 minutes, washed with water, immersed in a 2 wt% aqueous solution of a degreasing agent containing sodium metasilicate (degreasing agent A: a commercial material with the trademark of Surf Cleaner 155 available from Nippon Paint Co., Ltd.) as an alkaline solution containing a silicon compound at 60°C for 30 seconds, washed with water, and dried.

In Examples 2 and 12, the panel was immersed in a 10 wt% aqueous sulfuric acid solution at 40°C for 3 minutes, washed with water, immersed in a 5 wt% aqueous sodium hydroxide solution at 40°C for 3 minutes, washed with water, immersed in a 10 wt% aqueous sulfuric acid solution at room temperature for 1 minute, washed with water, immersed in a 2 wt% aqueous solution of a degreasing agent containing sodium metasilicate (degreasing agent A: a commercial material with the trademark of Surf Cleaner 155 available from Nippon Paint Co., Ltd.) as an alkaline solution containing a silicon compound at 60°C for 30 seconds, washed with water, and dried.

In Examples 3 and 13, the panel was immersed in a 30 wt% aqueous nitric acid solution at room temperature for 5 minutes, washed with water, immersed in a 2 wt% aqueous solution of a degreasing agent containing sodium metasilicate (degreasing agent A: a commercial material with the trademark of Surf Cleaner 155 available from Nippon Paint Co., Ltd.) as an alkaline solution containing a silicon compound at 60°C for 30 seconds, washed with water, and dried.

In Examples 4 and 9, the panel was immersed in a 2 wt% aqueous phosphoric acid solution at 60°C for 30 seconds, washed with water, immersed in a 2 wt% aqueous solution of a degreasing agent containing sodium metasilicate (degreasing agent A: a commercial material with the trademark of Surf Cleaner 155 available from Nippon Paint Co., Ltd.) as an alkaline solution containing a silicon compound at 60°C for 30 seconds, washed with water, and dried.

In Examples 5-8, Examples 14-26, and Comparative Examples 1-4, the panel was immersed in a 2 wt% aqueous solution of a degreasing agent containing sodium metasilicate (degreasing agent A: a commercial material with the trademark of Surf Cleaner 155 available from Nippon Paint Co., Ltd.) as an alkaline solution containing a silicon compound at 60°C for 30 seconds, washed with water, and dried.

In Example 10, the panel was immersed in a 2 wt% aqueous solution of a degreasing agent containing sodium metasilicate (degreasing agent B: a commercial material with the trademark of Surf Cleaner 53 available from Nippon Paint Co., Ltd.) as an alkaline solution containing a silicon compound at 60°C for 30 seconds, washed with water, and dried

### [Film-forming treatment]

Using the raw materials (ultraviolet absorber, HALS, zinc oxide, aluminum oxide, and silicon oxide) shown in Table 1, phosphoric acid (guaranteed reagent manufactured by Wako Pure Chemical Industries, Ltd.; content of phosphoric acid, 85 wt%) as a phosphorus compound, and isopropanol, water, or methyl ethyl ketone as a solvent, the solutions for film-forming treatment were prepared in accordance with the compositions shown in Table 2 (for Examples 1-10), Table 3 (for Examples 11-20), Table 4 (for Examples 21-26), and Table 5 (for Comparative Examples 1-4).

Using the solutions for film-forming treatment for Examples 1-26 and Comparative Examples 1-4, a film of undercoat was formed on each of the aforementioned pretreated panels.

In Examples 1-19 and 21-26 and Comparative Examples 1-4, the solution for film-forming treatment whose composition is shown in Table 2 or 3 was applied to the pretreated panel by a bar coater to a coating weight of 6 g/m² and dried at 200°C for 1 minute.

In Example 20, the solution for film-forming treatment for the first layer shown in Table 3 was applied to the pretreated panel by a bar coater to a coating weight of 6 g/m² and dried at 200°C for 1 minute, then the solution for film-forming treatment for the second layer shown in Table 3 was applied by a bar coater to the first layer to a coating weight of 6 g/m² and dried at 200°C for 1 minute.

In Comparative Examples 5 and 6, the panel of aluminum (JIS 5052) was used in the formation of a film of coating without forming a film of undercoat by this film-forming treatment.

In Examples 1-26 and Comparative Examples 1-4, the amount of the ultraviolet absorber and/or the HALS (ultraviolet absorber + HALS: mg/m²) or the amount of the metal oxide (mg/m²) in a unit area of the film of undercoat was determined by calculating the amount in the coating weight of 6 g/m² on the basis of the composition of the solution for film-forming treatment. The amount of phosphorus (P: mg/m²) was determined by X-ray fluorescence analysis. The amount of chromium (Cr: mg/m²) was quantitatively determined by X-ray fluorescence analysis and it was confirmed that the amount of chromium was below the detection limit of chromium (0.5 mg/m²) in all the determinations in Examples 1-26 and Comparative Examples 1-4.

Furthermore, the content of the ultraviolet absorber and/or the HALS (wt%), the content of the metal oxide (wt%), and the content of phosphorus (P: wt%) in the films of undercoat were calculated from the composition of the solutions for film-forming treatment.

### [Formation of film of coating]

The panels of aluminum and steel on which the film of undercoat had been formed after the aforementioned pretreatment and film-forming treatment, that is, the panels of aluminum, zinc electroplated steel, zinc hot-dip plated steel, zinc-5% aluminum alloy plated steel, and zinc-55% aluminum alloy plated steel in Examples 1-26 and Comparative Examples 1-4 and the panels of aluminum on which the film of undercoat had not been formed were respectively coated with the paints shown in Table 6 in the following manner to prepare the specimens of the coated metal materials.

In Example 1, the specimen was prepared as follows. Paint A was applied by a bar coater, baked at a peak metal temperature (PMT) of 225°C for 60 seconds, and dried to form a 10 µm-thick film of topcoat.

In Example 2, the specimen was prepared as follows. Paint B was applied by a bar coater, baked at a PMT of 225°C for 60 seconds, and dried to form a 15 µ m-thick film of topcoat.

In Example 3, the specimen was prepared as follows. Paint B was applied by a bar coater, baked at a PMT of 210°C for 40 seconds, and dried to form a 10 µ m-thick film of primer; then, paint I was applied by a bar coater to the film of primer, baked at a PMT of 225°C for 60 seconds, and dried to form a 10 µm-thick film of topcoat.

In Example 4, the specimen was prepared as follows. Paint C was applied by a bar coater, baked at a PMT of 210°C for 40 seconds, and dried to form a 5 m-thick film of primer; then, paint B was applied by a bar coater to the film of primer, baked at a PMT of 225°C for 60 seconds, and dried to form a 10 µm-thick film of topcoat.

In Example 5, the specimen was prepared as follows. Paint D was applied by a bar coater, baked at a PMT of 200°C for 10 minutes, and dried to form a 15 µ-thick film of topcoat.

In Example 6, the specimen was prepared as follows. Paint D was applied by a bar coater, baked at a PMT of 230°C for 40 seconds, and dried to form a 0.5 µm-thick film of primer; then, paint E was applied by a bar coater to the film of primer, baked at a PMT of 230°C for 100 seconds, and dried to form a 20 µ m-thick film of topcoat.

In Example 7, the specimen was prepared as follows. Paint D was applied by a car coater, baked at a PMT of 230°C for 40 seconds, and dried to form a 2 µ m-thick film of primer; then, paint A was applied by a bar coater to the film of primer, baked at a PMT of 230°C for 60 seconds, and dried to form a 10 µm-thick film of topcoat.

In Example 8, the specimen was prepared as follows. Paint K was applied by a car coater, baked at a PMT of 210°C for 40 seconds, and dried to form a 5 µ m-thick film of primer; then, paint H was applied by a bar coater to the film of primer, baked at a PMT of 225°C for 60 seconds, and dried to form a 10 µm-thick film of topcoat.

In Example 9, the specimen was prepared as follows. Paint F was applied by a sprayer, baked at 170°C for 20 minutes, and dried to form a 30 µm-thick film of topcoat.

In Example 10, the specimen was prepared as follows. Paint D was applied by a bar coater, baked at a PMT of 230°C for 40 seconds, and dried to form a 1 µ m-thick film of primer; then, paint I was applied by a bar coater to the film of primer, baked at a PMT of 225°C for 60 seconds, and dried to form a 15 µm-thick film of topcoat.

In Example 11, the specimen was prepared as follows. Paint J was applied by a sprayer, baked at 150°C for 30 minutes, and dried to form a 30 µm-thick film of topcoat.

In Example 12, the specimen was prepared as follows. Paint G was applied by a sprayer, baked at 100°C for 20 minutes, and dried to form a 50 µm-thick film of topcoat.

In Example 13, the specimen was prepared as follows. Paint D was applied by a bar coater, baked at a PMT of 230°C for 40 seconds, and dried to form a 2 µ m-thick film of primer; then, paint B was applied by a bar coater to the film of primer, baked at a PMT of 225°C for 60 seconds, and dried to form a 15 µm-thick film of topcoat.

In Example 14, the specimen was prepared as follows. Paint C was applied by a bar coater, baked at a PMT of 210°C for 40 seconds, and dried to form a 10 µ m-thick film of primer; then, paint H was applied by a bar coater to the film of primer, baked at a PMT of 225°C for 60 seconds, and dried to form a 15 µm-thick film of topcoat.

In Example 15, the specimen was prepared as follows. Paint D was applied by a car coater, baked at a PMT of 230°C for 40 seconds, and dried to form a 5 µ m-thick film of primer; then, paint H was applied by a car coater to the film of primer, baked at a PMT of 225°C for 60 seconds, and dried to form a 15 µm-thick film of topcoat.

In Example 16, the specimen was prepared as follows. Paint E was applied by a car coater, baked at a PMT of 230°C for 40 seconds, and dried to form a 5 µ m-thick film of primer; then, paint H was applied by a bar coater to the film of primer, baked at a PMT of 225°C for 60 seconds, and dried to form a 10 µm-thick film of topcoat.

In Example 17, the specimen was prepared as follows. Paint A was applied by a car coater, baked at a PMT of 210°C for 40 seconds, and dried to form a 5 µ m-thick film of primer; then, paint I was applied by a bar coater to the film of primer, baked at a PMT of 225°C for 60 seconds, and dried to form a 10 µm-thick film of topcoat.

In Example 18, the specimen was prepared as follows. Paint K was applied by a car coater, baked at a PMT of 210°C for 40 seconds, and dried to form a 2 µ m-thick film of primer; then, paint H was applied by a bar coater to the film of primer, baked at a PMT of 225°C for 60 seconds, and dried to form a 20 µm-thick film of topcoat.

In Example 19, the specimen was prepared as follows. Paint D was applied by a car coater, baked at a PMT of 230°C for 40 seconds, and dried to form a 5 µ m-thick film of primer; then, paint H was applied by a bar coater to the film of primer, baked at a PMT of 225°C for 60 seconds, and dried to form a 15 µm-thick film of topcoat.

In Example 20, the specimen was prepared as follows. Paint J was applied by a bar coater, baked at a PMT of 210°C for 40 seconds, and dried to form a 2 µ m-thick film of primer; then, paint I was applied by a bar coater to the film of primer, baked at a PMT of 225°C for 60 seconds, and dried to form a 15 µm-thick film of topcoat.

In Example 21, the specimen was prepared as follows. Paint A was applied by a bar coater, baked at a PMT of 225°C for 60 seconds, and dried to form a 10 µ m-thick film of topcoat.

In Example 22, the specimen was prepared as follows. Paint B was applied by a bar coater, baked at a PMT of 225°C for 60 seconds, and dried to form a 15 µ m-thick film of topcoat.

In Example 23, the specimen was prepared as follows. Paint D was applied by a bar coater, baked at a PMT of 230°C for 40 seconds, and dried to form a 1 µ m-thick film of primer; then, paint H was applied by a bar coater to the film of primer, baked at a PMT of 225°C for 60 seconds, and dried to form a 15 µm-thick film of topcoat.

In Example 24, the specimen was prepared as follows. Paint E was applied by a bar coater, baked at a PMT of 230°C for 40 seconds, and dried to form a 5 µ m-thick film of primer; then, paint I was applied by a bar coater to the film of primer, baked at a PMT of 225°C for 60 seconds, and dried to form a 15 µm-thick film of topcoat.

In Example 25, the specimen was prepared as follows. Paint B was applied by a bar coater, baked at a PMT of 210°C for 40 seconds, and dried to form a 5 µ m-thick film of primer; then, paint I was applied by a bar coater to the film of primer, baked at a PMT of 225°C for 60 seconds, and dried to form a 15 µm-thick film of topcoat.

In Example 26, the specimen was prepared as follows. Paint D was applied by a bar coater, baked at a PMT of 230°C for 40 seconds, and dried to form a 2 µ m-thick film of primer; then, paint H was applied by a bar coater to the film of primer, baked at a PMT of 225°C for 60 seconds, and dried to form a 15 µm-thick film of topcoat.

In Comparative Example 1, the specimen was prepared as follows. Paint D was applied by a bar coater, baked at a PMT of 230°C for 40 seconds, and dried to form a 10 µm-thick film of primer; then, paint H was applied by a bar coater to the film of primer, baked at a PMT of 225°C for 60 seconds, and dried to form a 10 µm-thick film of topcoat.

In Comparative Example 2, the specimen was prepared as follows. Paint D was applied by a bar coater, baked at a PMT of 230°C for 40 seconds, and dried to form a 5 µm-thick film of primer; then, paint H was applied by a bar coater to the film of primer, baked at a PMT of 225°C for 60 seconds, and dried to form a 10 µ m-thick film of topcoat.

In Comparative Example 3, the specimen was prepared as follows. Paint B was applied by a bar coater, baked at a PMT of 210°C for 40 seconds, and dried to form a 2 µm-thick film of primer; then, paint I was applied by a bar coater to the film of primer, baked at a PMT of 225°C for 60 seconds, and dried to form a 10 µ m-thick film of topcoat.

In Comparative Example 4, the specimen was prepared as follows. Paint B was applied by a bar coater, baked at a PMT of 210°C for 40 seconds, and dried to form a 10 µm-thick film of primer; then, paint I was applied by a bar coater to the film of primer, baked at a PMT of 225°C for 60 seconds, and dried to form a 10 µm-thick film of topcoat.

In Comparative Example 5, the specimen was prepared as follows. Paint B to which 10 wt% of the ultraviolet absorber TINUVIN 384-2 shown in Table 1 had been added on a solid basis was applied by a bar coater, baked at a PMT of 210°C for 40 seconds, and dried to form a 10 µm-thick film of primer; then, paint I was applied by a bar coater to the film of primer, baked at a PMT of 225°C for 60 seconds, and dried to form a 10 µm-thick film of topcoat.

In Comparative Example 6, the specimen was prepared as follows. Paint J to which 10 wt% of the ultraviolet absorber TINUVIN 400 and 10 wt% of the HALS TINUVIN 123 shown in Table 1 had been added on a solid basis was applied by a bar coater, baked at 150°C for 30 minutes, and dried to form a 20 µ m-thick film of topcoat.

### [Test for anticorrosion performance]

The specimens prepared as mentioned above in Examples1-26 and Comparative Examples 1-6 were respectively evaluated for the anticorrosion performance by the salt spray test, the boiling water immersion test, and the adhesion test after ultraviolet irradiation in the sunshine test (1,500 hours) to be described below.

The salt spray test was conducted according to JIS K5600 by making X-scribe lines, each line 7 cm in length, in the specimen and running the test for 1,000 hours. The adhesive properties were evaluated by sticking Cellotape (registered trademark) on the area of the X-scribe lines after the test period of 1,000 hours and peeling off the Cellotape. The results were evaluated in the following 4 ratings: ⊚, no corrosion, no blistering, and good adhesion at the scribe; ○, corrosion of less than 1 mm and good adhesion at the scribe; △, corrosion of 1-2 mm or peeling of less than 1 mm at the scribe; and ×, peeling of 1 mm at the scribe or peeling at places other than the scribe regardless of presence or absence of corrosion.

The boiling water immersion test was conducted by immersing the specimen in boiling water for 5 hours and evaluating the adhesive properties of the film of coating according to the adhesion test of JIS K5600 (cross-cut method, 1 mm lattice). The results were evaluated in the following 4 ratings: ⊚, no peeling; ○, peeling in less than 5% of the cross-cut area (class 1 or 0); △, peeling in 5-15% of the cross-cut area; and ×, peeling in more than 15% of the cross-cut area.

The adhesive properties after ultraviolet irradiation were evaluated by the sunshine test for a period of 1,500 hours followed by the adhesion test. The test as a whole was conducted by making X-scribe lines, each line 7 cm in length, on the specimen, running the test in a sunshine weather meter for 1,500 hours, then sticking Cellotape (registered trademark of an adhesive tape) on the area of the X-scribe lines and peeling off the Cellotape. The adhesive properties were evaluated in the following 4 ratings: ⊚, no peeling at the scribe; ○, peeling of less than 0.5 mm at the scribe; △, peeling of 0.5-1 mm at the scribe; and ×, peeling of 1 mm at the scribe or peeling at places other than the scribe.

The results of the salt spray test, the boiling water immersion test, and the sunshine test for the adhesive properties are shown respectively in Table 2 (Examples 1-10), Table 3 (Examples 11-20), Table 4 (Examples 21-26), and Table 6 (Comparative Examples 1-6).

In Examples 1-26, the specimens yielded good results, evaluated either ⊚ or ○, in the salt spray test, the boiling water immersion test, and the sunshine/adhesion test. In contrast, the specimen of Comparative Example 1 in which the amount of the ultraviolet absorber in the film of undercoat is less than 5 mg/m² and the specimen of Comparative Example 2 in which the amount of the ultraviolet, absorber in the film of undercoat exceeds 2.500 mg/m² were evaluated poor in the adhesive properties after the sunshine test. Likewise, the specimen of Comparative Example 3 in which the amount of the HALS in the film of undercoat was less than 5 mg/m² was evaluated poor in the adhesive properties after the sunshine test. Further, the specimen of Comparative Example 4 in which the film of undercoat contains no ultraviolet absorber or HALS and only the metal oxide showed poor adhesive properties in the salt spray test and the boiling water immersion test and somewhat poor adhesive properties in the sunshine test. Further, the specimen of Comparative Example 5 in which the ultraviolet absorber was added to the film of primer showed poor adhesive properties in the sunshine test and the specimen of Comparative Example 6 in which the ultraviolet absorber and the HALS were added to the film of topcoat showed poor adhesive properties in the sunshine test. These results indicate that addition of an ultraviolet absorber and/or a HALS to the film of coating does not improve the adhesive properties after the sunshine test; however, formation of a film of undercoat containing an ultraviolet absorber and/or a HALS on the uncontaminated surface of a metal material according to this invention markedly improves the adhesive properties after the sunshine test.

**[Table 1]**

| | Trademark | Solid content(%) | Name of manufacturer |
|---|---|---|---|
| Ultraviolet absorber | TINUVIN384-2 | - | Ciba Specialty Chemicals |
| | TINUVIN1130 | - | Ciba Specialty Chemicals |
| | TINUVIN400 | - | Ciba Specialty Chemicals |
| HALS (light stabilizer) | TINUVIN123 | - | Ciba Specialty Chemicals |
| | TINUVIN292 | - | Ciba Specialty Chemicals |
| Zinc oxide | NANOFINE-50A | - | Sakai Chemical Industry Co., Ltd. |
| Aluminum oxide | Aluminasol-100 | 10 | Nissan Chemical Industries, Ltd. |
| Silicon oxide | ST-O | 20 | Nissan Chemical Industries, Ltd. |
| | IPA-ST | 30 | Nissan Chemical Industries, Ltd. |
| | Aerosil 300CF | - | Nippon Aerosil Co., Ltd. |

**[Table 2]**

| Example No. | | | | 1 | 2 | 3 | 4 | 5 | 6 | 7 | 8 | 9 | 10 |
|---|---|---|---|---|---|---|---|---|---|---|---|---|---|
| Film of coating | Film of primer | | | | | B | C | | D | D | K | | D |
| | Film of topcoat | | | A | B | I | B | D | E | A | H | F | I |
| Solution for film-forming treatment | Layer of film | | | | | | | | | | | | |
| | Ultraviolet absorber | | TINUVIN 384-2 | 40 | | | | | | | | | |
| | | | TINUVIN 1130 | | 20 | | | | | | | | 15 |
| | | | TINUVIN 400 | | | 10 | | | | 15 | 5 | 1 | |
| | HALS | | TINUVIN 123 | | | | 40 | 5 | 1 | 15 | 5 | 1 | |
| | | | TINUVIN 292 | | | | | | | | | | |
| | Metal oxide | Zinc oxide | NANOFINE-50A | | | | | | | | | | |
| | | Aluminium oxide | Aluminasol-100 | | | | | | | | | | |
| | | Silicone oxide | ST-O | | | | | | | | | | |
| | | | IPA-ST | | | | | | | | | | |
| | | | Aerosil 300CF | | | | | | | | | | |
| | Phosphorus compound | | Phosphoric acid | | | | | | | | | 0.4 | 0.1 |
| | Solvent | Isopropanol | | | | | | | | | | | 20 |
| | | Water | | | | | | | | | | | 5 |
| | | Remainder (methyl ethyl ketone) | | 60.0 | 80.0 | 90.0 | 60.0 | 95.0 | 99.0 | 70.0 | 90.0 | 97.5 | 59.9 |
| | Concentration of solids (wt%) | | | 40.00 | 20.00 | 10.00 | 40.00 | 5.00 | 1.00 | 30.00 | 10.00 | 2.00 | 15.09 |
| Film of undercoat | Amount of ultraviolet absorber + HALS (mg/m²) | | | 2400 | 1200 | 600 | 2400 | 300 | 60 | 1800 | 600 | 120 | 900 |
| | Content of ultraviolet absorber and/or HALS (wt%) | | | 100 | 100 | 100 | 100 | 100 | 100 | 100 | 100 | 100 | 99.4 |
| | Amount of metal oxide (mg/m²) | | | | | | | | | | | | |
| | Content of metal oxide (wt%) | | | | | | | | | | | | |
| | Amount of P (mg/m²) | | | | | | | | | | | 6.5 | 1.6 |
| | Content of P (wt%) | | | | | | | | | | | 5.4 | 0.2 |
| | Amount of Cr (mg/m²) | | | Not detected | | | | | | | | | |
| Salt spray test | | | | ○ | ○ | ○ | ○ | ○ | ○ | ○ | ○ | ⊚ | ⊚ |
| Adhesive properties after boiling water immersion test | | | | ○ | ○ | ○ | ○ | ⊚ | ⊚ | ○ | ⊚ | ⊚ | ⊚ |
| Adhesive properties after 1500-hour sunshine test | | | | ○ | ⊚ | ⊚ | ○ | ⊚ | ⊚ | ○ | ⊚ | ⊚ | ⊚ |

**[Table 3]**

| Example No. | | | | 11 | 12 | 13 | 14 | 15 | 16 | 17 | 18 | 19 | 20 | |
|---|---|---|---|---|---|---|---|---|---|---|---|---|---|---|
| Film of coating | Film of primer | | | | | D | C | D | E | A | K | D | J | |
| | Film of topcoat | | | J | G | B | H | H | H | I | H | H | I | |
| Solution for film-forming treatment | Layer of film | | | | | | | | | | | | 1st | 2nd |
| | Ultraviolet absorber | | TINUVIN 384-2 | | | | | | | | | | | |
| | | | TINUVIN 1130 | | 5 | | | | | | | | | |
| | | | TINUVIN 400 | 2 | | 0.2 | 7 | 2.5 | 0.5 | 15 | 1 | 0.5 | | 1 |
| | HALS | | TINUVIN 123 | 2 | | 0.2 | 7 | 2.5 | 0.5 | 15 | 1 | 0.5 | | 1 |
| | | | TINUVIN292 | | | | | | | | | | | |
| | Metal oxide | Zinc oxide | NANOFINE-50A | | | 5.0 | 0.8 | | | 1.0 | 3.0 | | | |
| | | Aluminium oxide | Aluminasol-100 | | 10.0 | | | | | | | | | |
| | | Silicone oxide | ST-O | | | | | 2 | | | | | | |
| | | | IPA-ST | | | | | | 5 | | | 6 | | |
| | | | Aerosil 300CF | | | | | | | 0.1 | | | | |
| | Phosphorus compound | | Phosphoric acid | 0.9 | | | | | | | 0.6 | 0.30 | 0.30 | |
| | Solvent | Isopropanol | | 20 | 30 | | | 30 | 30 | | 30 | 30 | 30 | |
| | | Water | | 5 | 10 | | | 10 | | | 5 | 5 | 5 | |
| | | Remainder (methylethylketone) | | 70.1 | 45.0 | 94.6 | 85.2 | 53.0 | 64.0 | 68.9 | 59.4 | 57.7 | 64.7 | 98.0 |
| | Concentration of solids (wt%) | | | 4.77 | 6.00 | 5.40 | 14.80 | 5.40 | 2.50 | 31.10 | 5.51 | 3.06 | 0.26 | 2.00 |
| Film of undercoat | Amount of ultraviolet absorber + HALS (mg/m²) | | | 240 | 300 | 24 | 840 | 300 | 60 | 1800 | 120 | 60 | | 120 |
| | Content of ultraviolet absorber and/or HALS (wt%) | | | 83.8 | 83.3 | 7.4 | 94.6 | 92.6 | 40.0 | 96.5 | 36.3 | 32.7 | | 100 |
| | Amount of metal oxide (mg/m²) | | | | 60 | 300 | 48 | 24 | 90 | 66 | 180 | 108 | | |
| | Content of metal oxide (wt%) | | | | 16.7 | 92.6 | 5.4 | 7.4 | 60.0 | 3.5 | 54.4 | 58.9 | | |
| | Amount of P (mg/m²) | | | 14.7 | | | | | | | 9.7 | 4.8 | 4.8 | |
| | Content of P (wt%) | | | 5.1 | | | | | | | 2.9 | 2.6 | 31.6 | |
| | Amount of Cr (mg/m²) | | | Not detected | | | | | | | | | | |
| Salt spray test | | | | ⊚ | ○ | ○ | ○ | ○ | ○ | ○ | ○ | ⊚ | ⊚ | ⊚ |
| Adhesive properties after boiling water immersion test | | | | ⊚ | ⊚ | ○ | ○ | ⊚ | ⊚ | ○ | ○ | ⊚ | ⊚ | ⊚ |
| Adhesive properties after 1500-hour sunshine test | | | | ⊚ | ⊚ | ○ | ⊚ | ⊚ | ⊚ | ○ | ○ | ⊚ | ⊚ | ⊚ |

**[Table 4]**

| Example No. | | | | 21 | 22 | 23 | 24 | 25 | 26 |
|---|---|---|---|---|---|---|---|---|---|
| Film of coating | Film of primer | | | | | D | E | B | D |
| | Film of topcoat | | | A | B | H | I | I | H |
| Solution for film-forming treatment | Ultraviolet absorber | | TINUVIN 384-2 | 30 | | | | | |
| | | | TINUVIN 1130 | | | | | | 2 |
| | | | TINUVIN 400 | | 0.2 | | 1.5 | 0.1 | |
| | HALS | | TINUVIN 123 | | | | 1.5 | 0.05 | |
| | | | TINUVIN 292 | | | 15 | | | |
| | Metal oxide | Zinc oxide | NANOFINE-50A | | | | 5.0 | | |
| | | Aluminium oxide | Aluminasol-100 | | | | | | |
| | | Silicone oxide | ST-O | | | | | | |
| | | | IPA-ST | | | | | 3.6 | 10 |
| | | | Aerosil 300CF | | | | | | |
| | Phosphorus compound | | Phosphoric acid | | | | | | 0.50 |
| | Solvent | Isopropanol | | | | | | 30 | 30 |
| | | Water | | | | | | | 5 |
| | | Remainder (methylethylketone) | | 70.00 | 99.80 | 85.00 | 92.00 | 66.25 | 52.50 |
| | Concentration of solids (wt%) | | | 30.00 | 0.20 | 05.00 | 8.00 | 1.23 | 5.43 |
| Film of undercoat | Amount of ultraviolet absorber + HALS (mg/m²) | | | 1800 | 12 | 900 | 180 | 9 | 120 |
| | Content of ultraviolet absorber and/or HALS (wt%) | | | 100 | 100 | 100 | 37.5 | 12.2 | 36.9 |
| | Amount of metal oxide (mg/m²) | | | | | | 300 | 64.8 | 180 |
| | Content of metal oxide (wt%) | | | | | | 62.5 | 87.8 | 55.3 |
| | Amount of P (mg/m²) | | | | | | | | 8.1 |
| | Content of P (wt%) | | | | | | | | 2.5 |
| | Amount of Cr (mg/m²) | | | Not detected | | | | | |
| Salt spray test | | | | ○ | ○ | ○ | ○ | ○ | ⊚ |
| Adhesive properties after boiling water immersion test | | | | ○ | ○ | ⊚ | ⊚ | ⊚ | ⊚ |
| Adhesive properties after 1500-hour sunshine test | | | | ○ | ○ | ⊚ | ⊚ | ○ | ⊚ |

**[Table 5]**

| Comparative example No. | | | | 1 | 2 | 3 | 4 | 5 | 6 |
|---|---|---|---|---|---|---|---|---|---|
| Film of coating | Film of primer | | | D | D | B | B | B | |
| | Film of topcoat | | | H | H | I | I | I | J |
| Solution for film-forming treatment | Ultraviolet absorber | | TINUVIN 384-2 | | | | | | |
| | | | TINUVIN 1130 | 0.05 | | | | | |
| | | | TINUVIN 400 | | 50 | | | | |
| | HALS | | TINUVIN 123 | | | 0.02 | | | |
| | | | TINUVIN 292 | | | | | | |
| | Metal oxide | Zinc oxide | NANOFINE-50A | | | | 6.0 | | |
| | | Aluminium oxide | Aluminasol-100 | | | | | | |
| | | Silicone oxide | ST-O | | | | | | |
| | | | IPA-ST | | | | | | |
| | | | Aerosil 300CF | | | | | | |
| | Phosphorus compound | | Phosphoric acid | | | | | | |
| | Solvent | Isopropanol | | | | | | | |
| | | Water | | | | | | | |
| | | Remainder (methylethylketone) | | 99.95 | 50.00 | 99.98 | 94.00 | | |
| | Concentration of solids (wt%) | | | 0.05 | 50.00 | 0.02 | 6.00 | | |
| Film of undercoat | Amount of ultraviolet absorber + HALS (mg/m²) | | | 3 | 3000 | 1.2 | | | |
| | Content of ultraviolet absorber and/or HALS (wt%) | | | 100 | 100 | 100 | | | |
| | Amount of metal oxide (mg/m²) | | | | | | 360 | | |
| | Content of metal oxide (wt%) | | | | | | 100 | | |
| | Amount of P (mg/m²) | | | | | | | | |
| | Content of P (wt%) | | | | | | | | |
| | Amount of Cr (mg/m²) | | | Not detected | | | | | |
| Salt spray test | | | | Δ | × | Δ | × | Δ | Δ |
| Adhesive properties after boiling water immersion test | | | | ⊚ | × | Δ | × | Δ | ○ |
| Adhesive properties after 1500-hour sunshine test | | | | × | × | × | Δ | × | × |

**[Table 6]**

| | Trademark of paint | Type of resin | Color | Name of manufacturer |
|---|---|---|---|---|
| A | V Nitto120 | Epoxy resin | Clear | Dai Nippon Toryo Co., Ltd. |
| B | DIF J-15 | Polyester | Clear | Nippon Fine Coatings, Inc. |
| C | DIF H-10 | Polyester | Clear | Nippon Fine Coatings, Inc. |
| D | Aquabrid ASi90 | Acrylic silicone emulsion | Clear | Daicel Chemical Industries, Ltd. |
| E | Aquabrid 4790 | Acrylic silicone emulsion | Clear | Daicel Chemical Industries, Ltd. |
| F | Bell Clean #1000 | Acrylic urethane silicone | Clear | NOF Corporation |
| G | Alco SPNo100 | Acrylic silicone | Clear | Natoco Co., Ltd. |
| H | V Nitto500 | Polyester | Clear | Dai Nippon Toryo Co., Ltd. |
| I | NKC 2000 | Acrylic polyester | Clear | Nippon Fine Coatings, Inc. |
| J | KR-9706 | Acrylic silicone | Clear | Shin-Etsu Chemical Co., Ltd. |
| K | X-52-8148 | Silicone emulsion | Clear | Shin-Etsu Chemical Co., Ltd. |

### Industrial Applicability

A coated metal material provided by this invention shows excellent corrosion resistance and weather resistance in spite of the fact that it is substantially free of hexavalent and trivalent chromium or it is what is called "non-chromium" and it is an eco-friendly material. Hence, it can be used without anxiety in a wide variety of applications and is of high industrial value.

## Claims

1. A coated metal material wherein a film of coating on the surface of a metal material is formed on a film of undercoat containing an ultraviolet absorber and/or a HALS in an amount in the range of 5-2,500 mg/m².

2. A coated metal material as described in claim 1 wherein the film of undercoat contains a metal oxide other than chromium oxide in addition to the ultraviolet absorber and/or the HALS.

3. A coated metal material as described in claim 2 wherein the metal oxide is one kind or two kinds or more selected from zinc oxide, aluminum oxide, and silicon oxide.

4. A coated metal material as described in any one of claims 1 to 3 wherein the film of undercoat contains a phosphorus compound in an amount in the range of 0.5-15 mg/m² in addition to the ultraviolet absorber and/or the HALS.

5. A coated metal material as described in any one of claims 1 to 4 wherein the film of undercoat is composed of the first layer containing the phosphorus compound in an amount in the range of 0.5-15 mg/m² and the second layer formed on the first layer.

6. A coated metal material as described in any one of claims 1 to 5 wherein the metal material is an aluminum material such as aluminum and aluminum alloy or a steel material.
